# EUROPÄISCHE PATENTANMELDUNG

(11) **EP 2 806 533 A1**
(43) Veröffentlichungstag der Anmeldung: **26.11.2014**
(21) Anmeldenummer: 13168847.5
(22) Anmeldetag: 23.05.2013
(51) Int. Cl.: H02K 1/12, H02K 7/18

(54) **Elektrische Maschine mit verformbarem Stator**

(71) Anmelder: Siemens Aktiengesellschaft, 80333 München (DE)
(72) Erfinder: Madsen, Anders Jakob, 7400 Herning (DK)

(57) **Zusammenfassung**

Die vorliegende Erfindung betrifft eine elektrische Maschine (100), insbesondere einen Generator für eine Windturbine. Die elektrische Maschine (100) weist einen Rotor (120) und einen Stator (110) auf, wobei der Rotor (120) relativ zu dem Stator (110) um eine Drehachse (101) drehbar angeordnet ist. Der Rotor (120) und der Stator (110) sind derart angeordnet, dass eine Statoroberfläche (111) des Stators (110) und eine Rotoroberfläche (121) des Rotors (120) beabstandet sind. Die Rotoroberfläche (121) ist in Umfangsrichtung (102) um die Drehachse (101) kreisförmig ausgebildet. Der Stator (110) ist derart verformbar ausgebildet, dass die Statoroberfläche (111) ohne Ausüben von magnetischen Wechselwirkungen zwischen dem Rotor (120) und dem Stator (110) innerhalb von zumindest eines Segments des Stators (110) in Umfangsrichtung (102) um die Drehachse (101) ein nicht kreisförmiges Oberflächenprofil aufweist und dass bei einem Ausüben von magnetischen Wechselwirkungen zwischen dem Rotor (120) und dem Stator (110) der Stator (110) derart verformt ist, dass die Statoroberfläche (111) in Umfangsrichtung (102) um die Drehachse (101) kreisförmig ausgebildet ist, sodass ein Abstand zwischen der Statoroberfläche (111) und der Rotoroberfläche (121) konstant ist.

## Beschreibung

### Technisches Gebiet

Die vorliegende Erfindung betrifft eine elektrische Maschine, insbesondere einen Generator für eine Windturbine, sowie ein Verfahren zum Herstellen der elektrischen Maschine bzw. des Generators für die Windturbine.

### Hintergrund der Erfindung

Eine elektrische Maschine, wie beispielsweise ein Generator für eine Windturbine, besteht aus einem Rotor und einem Stator, wobei der Rotor sich relativ zu dem Stator dreht. Für Windturbinen wird ein Generator eingesetzt, welcher einen außenliegenden Rotor aufweist und einen innenliegenden Stator umschließt. Zwischen dem Rotor und dem Stator herrschen hohe magnetische Wechselwirkungen. Dies führt insbesondere bei dem Stator dazu, dass sich während des Betriebs des Generators der Stator verformt und sein Oberflächenprofil von einer kreisförmigen Form abweicht. Mit anderen Worten ist der Spalt zwischen dem kreisförmigen Rotor und dem Stator in Umfangsrichtung inkonstant und variiert stark abhängig von der Höhe der örtlichen magnetischen Wechselwirkungen. Diese Inkonstanz des Spalts zwischen dem Rotor und dem Stator beeinträchtigt die Effizienz der elektrischen Maschine bzw. des Generators.

### Darstellung der Erfindung

Es ist eine Aufgabe der vorliegenden Erfindung, eine elektrische Maschine bereitzustellen, welche eine hohe Effizienz aufweist.

Diese Aufgabe wird durch eine elektrische Maschine, insbesondere durch einen Generator für eine Windturbine, sowie durch ein Verfahren zum Herstellen einer elektrischen Maschine, insbesondere zum Herstellen eines Generators für eine Windturbine, gemäß den unabhängigen Ansprüchen gelöst.

Gemäß eines ersten Aspekts der vorliegenden Erfindung wird eine elektrische Maschine, insbesondere ein Generator für eine Windturbine, bereitgestellt. Die elektrische Maschine weist einen Rotor und einen Stator auf. Der Rotor ist relativ zu dem Stator um eine Drehachse drehbar angeordnet. Der Rotor und der Stator sind derart angeordnet, dass eine Statoroberfläche des Stators und eine Rotoroberfläche des Rotors beabstandet sind. Die Rotoroberfläche ist in Umfangsrichtung um die Drehachse kreisförmig ausgebildet.

Der Stator ist dabei derart verformbar ausgebildet, dass die Statoroberfläche ohne Ausüben von magnetischen Wechselwirkungen zwischen dem Rotor und dem Stator (innerhalb von zumindest einem Statorsegment) in Umfangsrichtung um die Drehachse ein nicht kreisförmiges Oberflächenprofil aufweist. Ferner ist der Stator derart verformbar ausgebildet, dass bei einem Ausüben von magnetischen Wechselwirkungen zwischen dem Rotor und dem Stator der Stator derart verformt ist, dass die Statoroberfläche in Umfangsrichtung um die Drehachse kreisförmig ausgebildet ist, so dass ein Abstand zwischen der Statoroberfläche und der Rotoroberfläche konstant ist.

Die elektrische Maschine ist beispielsweise ein Elektromotor oder ein elektrischer Generator. Insbesondere ist die elektrische Maschine ein Generator für eine Windturbine. In modernen Windturbinen werden getriebelose Techniken eingesetzt. Die Windblätter der Windturbine treiben dabei direkt den Rotor des Generators an. Da kein Getriebe zwischen Rotor und den Windblättern zwischengeschaltet ist und die Drehzahl des Rotors entsprechend gering ist, weist der Rotor sowie der Stator einen großen Durchmesser auf. Der Durchmesser des Stators kann beispielsweise zwischen 3,5 m und 4,5 m [Meter] betragen.

Der Rotor ist beispielsweise ein außenlaufender Rotor und umschließt den Stator. In einer anderen beispielhaften Ausführungsform der vorliegenden Erfindung ist der Rotor ein innenlaufender Rotor, so dass der Stator den Rotor umschließt.

Der Rotor weist beispielsweise in Umfangsrichtung aneinandergereihte Permanentmagnete auf, welche beispielsweise abwechselnd eine unterschiedliche Polung aufweisen.

Der Stator weist beispielsweise eine Vielzahl von Statorspulen auf, welche auf der Statoroberfläche angeordnet werden können. Hierzu weist der Stator beispielsweise eine Vielzahl von Kanälen auf, welche sich zumindest mit einer Komponente parallel zu der Drehachse erstrecken. Die Kanäle können als Kühlkanäle dienen oder die Kanäle können zur Aufnahme von entsprechenden Statorspulen ausgebildet sein.

Der Stator kann aus einem integralen kreisförmigen Segment hergestellt werden oder aus einer Vielzahl von Statorsegmenten, welche nacheinander in Umfangsrichtung miteinander (z.B. lösbar) befestigt sind.

Aufgrund der Anordnung der Spulen und der Permanentmagnete herrschen zwischen dem Stator und dem Rotor hohe magnetische Wechselwirkungen. Insbesondere bei Betrieb der elektrischen Maschine wird beispielsweise mittels der Statorspulen die magnetische Wechselwirkung derart gesteuert, dass umlaufend um die Statoroberfläche sozusagen eine magnetische Zugkraft wirkt.

Diese magnetische Wechselwirkung führt dazu, dass der Stator verformt wird und beispielsweise in Richtung Rotor angezogen oder von dem Rotor abgestoßen wird. Die magnetischen Wechselwirkungen zwischen Rotor und Stator werden beispielsweise durch Permanentmagnete, welche am Rotor und/oder am Stator angeordnet sind, hervorgerufen. Die magnetischen Wechselwirkungen können somit bei Betrieb oder im Stillstand der elektrischen Maschine wirken.

Diese magnetischen Wechselwirkungen können für bestimmte Betriebszustände, z.B. Stillstand oder Volllast, der elektrischen Maschine beispielsweise empirisch oder aufgrund von Laborversuchen vorherbestimmt werden. Abhängig von der Kenntnis der Stärke und des örtlichen Verlaufs der magnetischen Wechselwirkungen kann der Grad der Deformation des Stators vorherbestimmt werden.

Basierend darauf wird gemäß der vorliegenden Erfindung der Stator bzw. seine Statorsegmente derart hergestellt, dass ohne Ausüben von magnetischen Wechselwirkungen zwischen Rotor und dem Stator, beispielsweise vor Montage der Permanentmagnete an dem Rotor, der Stator kein kreisförmiges Oberflächenprofil aufweist. Beispielsweise weist der Stator ohne Ausüben von magnetischen Wechselwirkungen ein (im Vergleich zu einem kreisförmigen Verlauf) abgeflachtes Oberflächenprofil auf.

Die Verformbarkeit des Stators ist derart vorherbestimmbar, dass basierend auf den vorhersagbaren magnetischen Wechselwirkungen zwischen dem Rotor und dem Stator bei Betrieb oder bei Stillstand des Generators der Stator derart verformt wird, dass bei Ausüben der magnetischen Wechselwirkung der Stator ein kreisförmiges Oberflächenprofil aufweist.

Die Verformbarkeit des Stators kann beispielsweise über die Materialauswahl, die Wandstärke bzw. die Profildicke und von den geometrischen Abmessungen, wie beispielsweise dem Durchmesser des Stators, abhängig sein.

Der Stator ist insbesondere in einer lamellierten Bauart ausgebildet, wobei eine Vielzahl von Statorblechen entlang der Axialrichtung hintereinander angeordnet sind. Aufgrund dieser lamellierten Bauart des Stators weist dieser eine geringere Steifigkeit als z.B. der Rotor auf. Die Verformbarkeit des Stator in der lamellierten Bauart ist ebenfalls vorherbestimmbar.

Die Statoroberfläche ist diejenige Oberfläche des Stators, welche dem Rotor zugewandt ist. Entsprechend ist die Rotoroberfläche diejenige Oberfläche des Rotors, welche dem Stator zugewandt ist. Zwischen der Statoroberfläche und der Rotoroberfläche bildet sich ein Spalt aus. Der Spalt bzw. der radiale Abstand zwischen der Statoroberfläche und der Rotoroberfläche ist aufgrund der Verformung des Stators während des Betriebs der elektrischen Maschine konstant. Außerhalb des Betriebs der elektrischen Maschine ist der Stator verformt, das heißt ohne Ausüben von magnetischen Wechselwirkungen zwischen Rotor und Stator, ist der Spalt aufgrund der ursprünglichen nicht kreisförmigen Ausgestaltung des Stators inkonstant. Der Spalt zwischen der Rotoroberfläche und der Statoroberfläche beträgt während des Betriebs der elektrischen Maschine, d.h. bei Ausüben der magnetischen Wechselwirkungen zwischen Rotor und Stator, ungefähr 2 mm bis ungefähr 8 mm [Millimeter] in Radialrichtung.

Gemäß eines weiteren Aspekts der vorliegenden Erfindung wird ein Verfahren zum Herstellen einer elektrischen Maschine, insbesondere zum Herstellen eines Generators für eine Windturbine, beschrieben. Die elektrische Maschine weist dieselben Merkmale wie die oben beschriebene elektrische Maschine auf. Gemäß dem Herstellverfahren wird der Rotor relativ zu dem Stator drehbar angeordnet. Ferner wird gemäß dem Herstellverfahren der Stator verformbar ausgebildet, derart, dass die Statoroberfläche ohne Ausüben von magnetischen Wechselwirkungen zwischen dem Rotor und dem Stator in Umfangsrichtung um die Drehachse ein nicht-kreisförmiges Oberflächenprofil aufweist und dass bei einem Ausüben von magnetischen Wechselwirkungen zwischen dem Rotor und dem Stator der Stator derart verformt ist, dass die Statoroberfläche in Umfangsrichtung um die Drehachse kreisförmig ausgebildet ist, so dass ein Abstand zwischen der Statoroberfläche und der Rotoroberfläche konstant ist.

Ferner kann gemäß einer beispielhaften Ausführungsform der vorliegenden Erfindung an dem Rotor eine Vielzahl von Permanentmagneten angeordnet werden, um die magnetischen Wechselwirkungen zwischen dem Rotor und dem Stator zu erzeugen. Gemäß einer weiteren beispielhaften Ausführungsform des Verfahrens wird das Anordnen der Permanentmagnete an dem Rotor nach dem drehbaren Anordnen des Rotors relativ zu dem Stator durchgeführt.

Gemäß der vorliegenden Erfindung wird der Stator mit einer Statoroberfläche hergestellt, welche ohne Einwirkung von magnetischen Wechselwirkungen zwischen dem Rotor und dem Stator entlang der Axialrichtung (d.h. entlang der Drehachse des Rotors) eine unebene (wellenförmige) Oberfläche aufweist und/oder entlang der Umfangsrichtung keine kreisförmige Oberflächenkontur aufweist. Nach Ausüben von magnetischen Wechselwirkungen zwischen dem Rotor und dem Stator, zum Beispiel während des Betriebs oder auch während des Stillstands der elektrischen Maschine, verformt sich der Stator derart, dass die Statoroberfläche entlang der Axialrichtung ein ebenes Oberflächenprofil aufweist und entlang der Umfangsrichtung ein kreisrundes Oberflächenprofil aufweist. Somit wird während des Betriebs der elektrischen Maschine, bzw. während des Ausübens von magnetischen Wechselwirkungen zwischen Rotor und Stator, ein Spalt zwischen dem Rotor und dem Stator ausgebildet, wobei der Spalt zwischen der gesamten Statoroberfläche und der gesamten Rotoroberfläche konstant ist.

Durch eine Ausbildung einen konstanten Abstands zwischen dem Rotor und dem Stator wird die Effizienz der elektrischen Maschine erhöht. Der Stator kann ferner weniger steif und flexibler ausgebildet werden, da seine Deformation während des Ausübens von magnetischen Wechselwirkungen vorherbestimmbar und somit eingeplant ist, um einen konstanten Abstand zwischen der Rotoroberfläche und der Statoroberfläche herzustellen. Um den Stator somit weniger steif und flexibel herzustellen, ist ein geringerer Materialeinsatz notwendig, so dass Herstellkosten und das Gewicht der elektrischen Maschine reduziert werden können.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Figuren näher beschrieben.
Fig. 1 zeigt eine schematische Darstellung einer elektrischen Maschine gemäß einer beispielhaften Ausführungsform der vorliegenden Erfindung;
Fig. 2 zeigt eine perspektivische Darstellung eines Stators gemäß einer beispielhaften Ausführungsform der vorliegenden Erfindung.

### Detaillierte Beschreibung von exemplarischen Ausführungsformen

Gleiche oder ähnliche Komponenten sind in den Figuren mit gleichen Bezugsziffern versehen. Die Darstellungen in den Figuren sind schematisch und nicht maßstäblich.

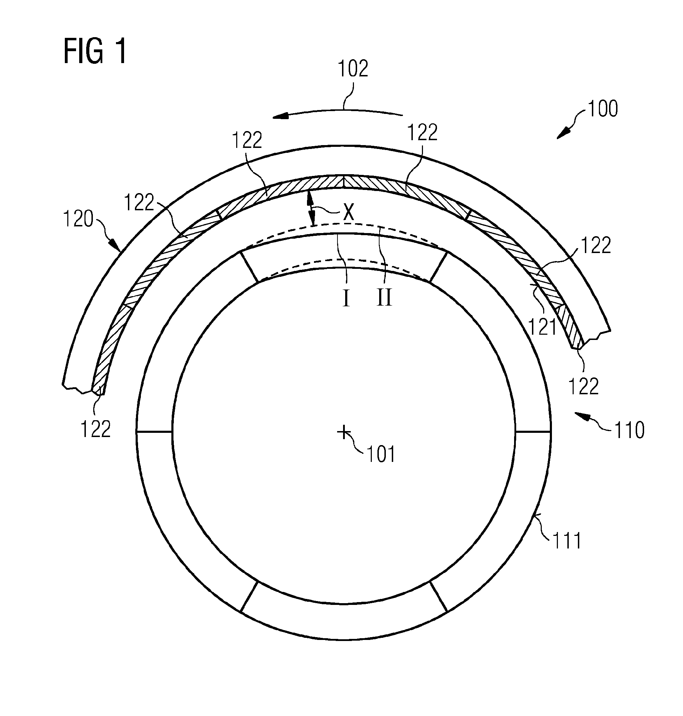

Fig. 1 zeigt eine elektrische Maschine 100, welche beispielsweise einen Generator für eine Windturbine darstellt. Die elektrische Maschine 100 weist einen Rotor 120 und einen Stator 110 auf. Das Ausführungsbeispiel in Fig. 1 weist beispielsweise einen außenlaufenden Rotor 120 auf, welcher den Stator 110 umschließt. Zur besseren Übersicht ist der Rotor 120 nur abschnittsweise dargestellt.

Der Rotor 120 ist relativ zu dem Stator 110 um eine Drehachse 101 drehbar angeordnet. Der Rotor 120 und der Stator 110 sind derart angeordnet, dass eine Statoroberfläche 111 des Stators und eine Rotoroberfläche 121 des Rotors beabstandet sind. Die Statoroberfläche 111 des Stators 110 ist diejenige des Stators, welche dem Rotor 120 zugewandt ist. Die Rotoroberfläche 121 des Rotors 120 ist diejenige Oberfläche des Rotors 120, welche der Statoroberfläche 111 zugewandt ist.

Der Rotor 120 ist steif und unverformbar ausgebildet, so dass die Rotoroberfläche 121 in Umfangsrichtung 102 um die Drehachse 101 kreisförmig ausgebildet ist und nicht durch magnetische Kräfte beinflussbar ist.

Der Stator 110 ist derart verformbar ausgebildet, dass die Statoroberfläche 111 ohne Ausüben von magnetischen Wechselwirkungen zwischen dem Rotor 120 und dem Stator 110 in Umfangsrichtung 102 um die Drehachse 101 ein nicht-kreisförmiges Oberflächenprofil aufweist (entspricht den durchgängigen Linien in Fig. 1). Ferner ist der Stator 110 derart verformbar ausgebildet, dass bei einem Ausüben von magnetischen Wechselwirkungen zwischen dem Rotor 120 und dem Stator 110 der Stator 110 derart verformbar ist, dass die Statoroberfläche 111 in Umfangsrichtung 102 um die Drehachse 101 kreisförmig ausgebildet ist, so dass ein Abstand x zwischen der Statoroberfläche 111 und der Rotoroberfläche 121 konstant ist (gestrichelte Linie in Fig. 1).

Der Stator 110 ist derart hergestellt, dass ohne die magnetischen Wechselwirkungen der Stator 110 keine kreisrunde Oberflächenform aufweist und entsprechend dem Betriebszustand I eine abgeflachte Oberflächenform aufweist.

Erst nach Ausüben der magnetischen Wechselwirkungen zwischen dem Rotor 120 und dem Stator 110 verformt sich der Stator derart, dass der Stator 110 bzw. dessen Statoroberfläche 111 eine kreisrunde bzw. kreisförmige Oberflächenprofilform aufweist (entspricht Betriebszustand II).

Der Abstand x, welcher einen radialen Abstand x bezüglich der Drehachse 101 darstellt, ist in dem Betriebszustand II, bei welchem magnetische Wechselwirkungen zwischen dem Rotor 120 und dem Stator 110 ausgeübt werden, konstant.

An einer Oberfläche des Rotors 120, insbesondere an der Rotoroberfläche 121, können eine Vielzahl von Permanentmagneten 122 angeordnet werden.

Ferner ist der Stator 110 derart verformbar ausgebildet, dass die Statoroberfläche 111 ohne Ausüben von magnetischen Wechselwirkungen zwischen dem Rotor 120 und dem Stator 110 innerhalb von zumindest einem Segment des Stators 110 in Axialrichtung zur Drehachse 101 ein unebenes Oberflächenprofil (z.B. eine wellenförmiges Oberflächenprofil, abhängig von der Stärke und Ausbildung der magnetischen Wechselwirkungen zwischen den Rotor 120 und dem Stator 110) aufweist und dass bei einem Ausüben der magnetischen Wechselwirkungen zwischen dem Rotor 120 und dem Stator 110 der Stator 110 derart verformt ist, dass die Statoroberfläche 111 in Axialrichtung zur Drehachse 101 ein glattes (stetiges, d.h. glattes nicht wellenförmiges, ebenes) Oberflächenprofil aufweist, sodass der Abstand x zwischen der Statoroberfläche 111 und der Rotoroberfläche 121 in Umfangsrichtung 102 und zudem in Axialrichtung konstant ist.

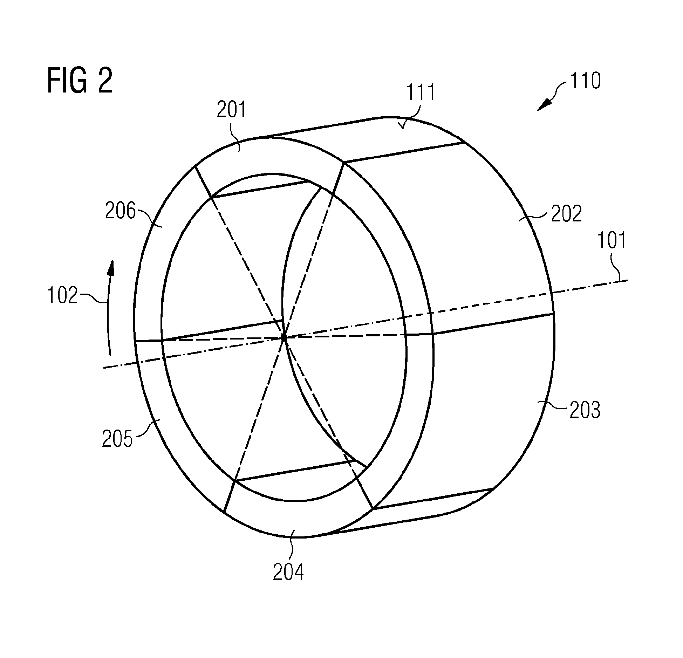

Fig. 2 zeigt eine perspektivische Darstellung des Stators 110. Der Stator 110 kann beispielsweise aus einer Vielzahl von Statorsegmenten 201 bis 206 ausgebildet sein, welche in Umfangsrichtung 102 aneinander angeordnet sind. Jedes der Statorsegmente 201 bis 206 kann entsprechend eine nicht kreisrunde Form bzw. ein nicht kreisrundes Oberflächenprofil entlang der Umfangsrichtung 102 und/oder ein unebenes Oberflächenprofil entlang der Axialrichtung bzgl. der Drehachse 101 aufweisen. Jedes Statorsegment 201 bis 206 kann unabhängig voneinander und individuell ein vorbestimmtes Verformungsverhalten aufweisen, so dass der Stator 110 entlang der Umfangsrichtung 102 auf verschiedene lokale magnetische Wechselwirkungen zwischen dem Rotor 120 und dem Stator 110 angepasst werden kann, so dass in dem Betriebszustand II mit magnetischen Wechselwirkungen jedes Statorsegment 201 bis 206 ein kreisrundes, glattes Oberflächenprofil aufweist. Somit kann während des Betriebs der elektrischen Maschine 100 in dem Betriebszustand II ein konstanter Abstand x zwischen dem Rotor 120 und dem Stator 110 bereitgestellt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Elektrische Maschine (100), insbesondere ein Generator für eine Windturbine, die elektrische Maschine (100) aufweisend
einen Rotor (120), und
einen Stator (110),
wobei der Rotor (120) relativ zu dem Stator (110) um eine Drehachse (101) drehbar angeordnet ist,
wobei der Rotor (120) und der Stator (110) derart angeordnet sind, dass eine Statoroberfläche (111) des Stators (110) und eine Rotoroberfläche (121) des Rotors (120) beabstandet sind, wobei die Rotoroberfläche (121) in Umfangsrichtung (102) um die Drehachse (101) kreisförmig ausgebildet ist,
wobei der Stator (110) derart verformbar ausgebildet ist,
dass die Statoroberfläche (111) ohne Ausüben von magnetischen Wechselwirkungen zwischen dem Rotor (120) und dem Stator (110) innerhalb von zumindest eines Segments des Stators (110) in Umfangsrichtung (102) um die Drehachse (101) ein nicht kreisförmiges Oberflächenprofil aufweist, und
dass bei einem Ausüben von magnetischen Wechselwirkungen zwischen dem Rotor (120) und dem Stator (110) der Stator (110) derart verformt ist, dass die Statoroberfläche (111) in Umfangsrichtung (102) um die Drehachse (101) kreisförmig ausgebildet ist, sodass ein Abstand zwischen der Statoroberfläche (111) und der Rotoroberfläche (121) konstant ist.

2. Elektrische Maschine (100) gemäß Anspruch 1,
wobei der Stator (110) derart verformbar ausgebildet ist,
dass die Statoroberfläche (111) ohne Ausüben von magnetischen Wechselwirkungen zwischen dem Rotor (120) und dem Stator (110) innerhalb von zumindest eines Segments des Stators (110) in Axialrichtung zur Drehachse (101) ein unebenes Oberflächenprofil aufweist, und
dass bei einem Ausüben von magnetischen Wechselwirkungen zwischen dem Rotor (120) und dem Stator (110) der Stator (110) derart verformt ist, dass die Statoroberfläche (111) in Axialrichtung zur Drehachse (101) ein glattes Oberflächenprofil aufweist, sodass ein Abstand zwischen der Statoroberfläche (111) und der Rotoroberfläche (121) konstant ist.

3. Elektrische Maschine (100) gemäß Anspruch 1 oder 2, wobei der Rotor (120) ein außenlaufender Rotor (120) ist und den Stator (110) umschließt.

4. Elektrische Maschine (100) gemäß Anspruch 1 bis 3,
wobei der Rotor (120) ein innenlaufender Rotor (120) ist und der Stator (110) den Rotor (120) umschließt.

5. Elektrische Maschine (100) gemäß einem der Ansprüche 1 bis 4,
wobei der Rotor (120) zumindest einen Permanentmagnet (122) zum Erzeugen der magnetischen Wechselwirkungen zwischen dem Rotor (120) und dem Stator (110) aufweist.

6. Elektrische Maschine (100) gemäß einem der Ansprüche 1 bis 5,
wobei der Stator (110) eine Vielzahl von Kanälen aufweist, welche sich mit zumindest einer Komponente entlang der Drehachse (101) erstrecken.

7. Elektrische Maschine (100) gemäß Anspruch 6,
wobei der Stator (110) zumindest eine Statorspule aufweist, welche in einem der Kanäle angeordnet ist.

8. Elektrische Maschine (100) gemäß einem der Ansprüche 1 bis 7,
wobei der Stator (110) aus einer Vielzahl von Statorsegmenten besteht, welche nacheinander in Umfangsrichtung (102) miteinander befestigt sind.

9. Verfahren zum Herstellen einer elektrischen Maschine, insbesondere zum Herstellen eines Generator für eine Windturbine, das Verfahren aufweisend
drehbares Anordnen eines Rotors (120) relativ zu einem Stator (110) um eine Drehachse (101),
wobei der Rotor (120) und der Stator (110) derart angeordnet sind, dass eine Statoroberfläche (111) des Stators (110) und eine Rotoroberfläche (121) des Rotors (120) beabstandet sind, wobei die Rotoroberfläche (121) in Umfangsrichtung (102) um die Drehachse (101) kreisförmig ausgebildet ist, und
verformbares Ausbilden eines Stators (110), derart,
dass die Statoroberfläche (111) ohne Ausüben von magnetischen Wechselwirkungen zwischen dem Rotor (120) und dem Stator (110) in Umfangsrichtung (102) um die Drehachse (101) ein nicht kreisförmiges Oberflächenprofil aufweist, und
dass bei einem Ausüben von magnetischen Wechselwirkungen zwischen dem Rotor (120) und dem Stator (110) der Stator (110) derart verformt ist, dass die Statoroberfläche (111) in Umfangsrichtung (102) um die Drehachse (101) kreisförmig ausgebildet ist, sodass ein Abstand zwischen der Statoroberfläche (111) und der Rotoroberfläche (121) konstant ist.

10. Verfahren nach Anspruch 9,
Anordnen von Permanentmagneten an dem Rotor (120), um die magnetischen Wechselwirkungen zwischen dem Rotor (120) und dem Stator (110) zu erzeugen.

11. Verfahren nach Anspruch 10,
wobei das Anordnen der Permanentmagnete an dem Rotor (120) nach dem drehbaren Anordnen des Rotors (120) relativ zu dem Stator (110) durchgeführt wird.
